# EUROPÄISCHE PATENTSCHRIFT

(11) **EP 3 080 038 B1**
(45) Veröffentlichungstag und Bekanntmachung des Hinweises auf die Patenterteilung: **01.05.2019**
(21) Anmeldenummer: 14838832.5
(22) Anmeldetag: 04.12.2014
(51) Int. Cl.: C01B 3/38, C01B 3/58, C25B 1/04, C10L 3/08, C25B 15/08, H01M 8/0612

(54) **VERFAHREN ZUM TRANSPORT UND ZUR SPEICHERUNG VON WASSERSTOFF**
HYDROGEN TANSPORT AND STORAGE PROCESS
PROCÉDÉ DE TRANSPORT ET DE STOCKAGE DE L'HYDROGÈNE

(30) Priorität: 11.12.2013 DE 102013020511
(43) Veröffentlichungstag der Anmeldung: 19.10.2016
(60) Teilanmeldung: 19000114.9
(73) Patentinhaber: Dietrich, Karl-Werner, 51519 Odenthal (DE)
(72) Erfinder: Dietrich, Karl-Werner, 51519 Odenthal (DE)
(86) Internationale Anmeldenummer: PCT/DE2014/000618
(87) Internationale Veröffentlichungsnummer: WO 2015/085981

(56) Entgegenhaltungen:
- WO-A1-2013/029701
- WO-A1-2013/152748
- DE-A1-102009 018 126
- DE-A1-102012 007 136
- DE-A1-102012 200 221
- COCCO D ET AL: "Use of alternative hydrogen energy carriers in SOFC-MGT hybrid power plants", ENERGY CONVERSION AND MANAGEMENT, ELSEVIER SCIENCE PUBLISHERS, OXFORD, GB, Bd. 50, Nr. 4, 1. April 2009 (2009-04-01), Seiten 1040-1048, XP025991546, ISSN: 0196-8904, DOI: 10.1016/J.ENCONMAN.2008.12.019 [gefunden am 2009-01-24]

## Beschreibung

Wasserstoff ist ein Sekundärenergieträger für erneuerbare Energien. Er kann durch Wasserelektrolyse aus Wind- und Solarenergie gewonnen, im Erdgasnetz gespeichert und transportiert und getrennt oder zusammen mit dem Erdgas in elektrische Energie umgewandelt werden. Wegen des hohen Wirkungsgrades und weil sie auch in der Mobilität eingesetzt werden kann ist die Umwandlung von Wasserstoff in elektrische Energie in einer Brennstoffzelle von besonderem Interesse.

Wegen der physikalischen und brandtechnischen Unterschiede zwischen Erdgas und Wasserstoff, welche an den Verbrauchsstellen zu Problemen führen, wird, wie in der WO 2013/043130 A1, der DE 102009018126 A1 und der DE 102012200221 A1 besehrieben, der Wasserstoff mit Synthesegas (Kohlenmonoxid + Wasserstoff) in Methan umgewandelt und das Erdgas ähnliche Methan wird in das Gasnetz eingeleitet und dort als erneuerbare Energie gespeichert und transportiert.

Dem Erdgasnetz kann dann das eingespeiste Methan als Erdgas entnommen und wieder in elektrische Energie umgewandelt werden. Zur Verstromung in einer Brennstoffzelle wird das entnommene Erdgas/Methan in einem Dampfreformer wieder in Wasserstoff verwandelt. Bei dem Verfahren wird gemäß der Reaktionsgleichungen 1. und 2. der in der Elektrolyse aus erneuerbarer elektrischer Energie gewonnene Wasserstoff mengenmäßig verdoppelt:
1. Reaktion von Synthesegas mit Wasserstoff (CO + H2) + 2 H2 = CH4 + H2O
2. Zerlegung von Methan im Dampfreformer CH4 + 4 H2O = 4 H2 + CO2
   Wie man in 1. sieht, werden zur Bildung von Methan mit Synthesegas (CO + H2) 2 Mol Elektrolyse stämmiger Wasserstoff (H2) für 1 Mol Methan benötigt während bei der späteren Zerlegung von Methan/Erdgas im Dampfreformer 4 Mol Wasserstoff erhalten werden.

Gegenstand der vorliegenden Erfindung ist daher ein Verfahren zum Transport, zur Speicherung und Volumenverdoppelung des Sekundärenergieträgers Wasserstoff, in dem mit Energie aus dem Stromnetz oder einer Wind- oder Solaranlage durch Elektrolyse erzeugter Wasserstoff mit Synthesegas zu Methan umgesetzt wird, Methan in das Erdgasnetz eingeleitet und im Erdgasnetz gespeichert und transportiert wird und die dem eingeleiteten Methan entsprechende Menge an Erdgas dem Gasnetz entnommen und in einem Dampfreformer in Wasserstoff und Kohlendioxid zerlegt wird und der vom Kohlendioxid abgetrennte Wasserstoff zur Stromerzeugung in einer Brennstoffzelle verwendet wird und die Brennstoffzelle in einem Kraftfahrzeug zur Mobilität eingesetzt wird. Vorteilhafte Weiterbildungen ergeben sich durch die Merkmale der abhängigen Ansprüche.

Hervorzuheben ist, dass hier Elektrolyse stämmiger Wasserstoff als Sekundärenergieträger für erneuerbare Energien in Erdgas ähnliches Methan verwandelt, im Gasnetz transportiert und gespeichert wird und nach Entnahme im Dampfreformer in die doppelte Menge an Wasserstoff umgewandelt wird und danach der Wasserstoff der für ihn optimalen Energieumwandlung in der Brennstoffzelle zugeführt werden kann.

Im Dampfreformer wird neben Wasserstoff auch Kohlendioxid gebildet, das nach seiner Abtrennung entweder gespeichert oder freigesetzt wird. Die Freisetzung von Kohlendioxid führt zu seiner Zunahme in der Atmosphäre. Wird zur Herstellung von Synthesegas Biomasse, z.B. Holz verwendet, so erfolgt die Freisetzung von Kohlendioxid Klima neutral.

Wird das Synthesegas aus Biomasse gewonnen und das beim Reforming gebildete Kohlendioxid gespeichert/sequestriert, so wird das Kohlendioxid, das die als Biomasse verwendete Pflanze in der Vegetationsphase aus der Atmosphäre genommen hat, dauerhaft im Boden gespeichert: Kohlendioxid in der Atmosphäre nimmt nach dem erfindungsgemäßen Verfahren dann proportional zum sequestrierten Biokohlendioxid ab.

Kohlendioxid dient auch als Chemierohstoff und als Speicherstoff für erneuerbare Energien. Dabei wird Wasserstoff mit gespeichertem Kohlendioxid in Methan umgewandelt, das wie oben gezeigt in das Gasnetz eingeleitet wird. Auch die Herstellung von Methanol und Formaldehyd ist möglich.

Zusammengefasst kann das beim erfindungsgemässen Reforming von Methan/Erdgas erhaltene Kohlendioxid:
1. freigesetzt
2. sequestriert
3. gespeichert und zur Rückbildung von Methan oder als Chemierohstoff verwendet werden Wird gemäß 3. Kohlendioxid an Stelle von Synthesegas bei der Methanisierung von Wasserstoff verwendet, so werden je Mol gebildetes Methan 4 Mol Wasserstoff und nicht zwei Mol wie beim Synthesegas verbraucht.

In einer besonderen Ausführungsform dieser Erfindung wird das beim Reforming erhaltene Kohlendioxid gespeichert und mit frischem Erdgas in einer "dry reforming" genannten Reaktion zu Synthesegas umgesetzt, welches erfindungsgemäß erneut mit Elektrolyse-Wasserstoff zu Methan reagiert. D.h., das im Reformer gebildete Kohlendioxid wird im Kreis gefahren.

Das im Reformer gewonnene Kohlendioxid kann auch zum Ort der Rekonstruktion von Methan mit Elektrolyse-Wasserstoff transportiert werden. Sowohl zum Transport als auch zur Speicherung wird Kohlendioxid entweder flüssig in Druckbehältern oder fest als sogenanntes "Trockeneis" in wärmegedämmten Behältnissen aufbewahrt. Festzuhalten ist: Kohlendioxid, das wiederverwendet wird, gelangt nicht in die Atmosphäre! Kohlendioxid kann auch als Gas gespeichert werdem.

Das aus dem Reformer stammende Kohlendioxid eignet sich deshalb zur Weiterverwendung, weil es im Gegensatz zu Kohlendioxid aus der Verbrennung von Kohlenstoffverbindungen leicht abzutrennen ist. Bei der Reaktion von Methan mit Wasserdampf entstehen als Endprodukte nur Kohlendioxid und Wasserstoff, welche einfach zu trennen sind. Entweder durch Druck-Wechselabsorption von Wasserstoff oder durch Druckverflüssigung von Kohlendioxid.

Die Herstellung des Synthesegases erfolgt nach allen bekannten Verfahren, bei denen Kohlenstoff enthaltende Verbindungen und Materialien unter Anwendung von Hitze und Druck mit Wasserdampf zu einer nahezu äquimolaren Mischung aus Kohlenmonoxid (CO) und Wasserstoff (H2) reagieren.

Soll das bei der Umsetzung von Methan im Reformer gebildete Kohlendioxid freigesetzt werden, so wird als Ausgangsstoff für das Synthesegas Biomasse, z. B. Holz, bevorzugt. Die Emission von Bio-Kohlendioxid ist Klima neutral. Es können auch Material- Mischungen aus biologischem und fossilem Kohlenstoff zur Herstellung von Synthesegas verwendet werden. Den Bioanteil im in das Erdgasnetz eingeleiteten Methan kann man mit der Radiokarbon (C14) Methode nachweisen. Nur der biologische Kohlenstoff enthält C14 (vgl. WO 2013/034130, Seite 18, 1 und 2. Absatz). Wasserstoff wird seit langem als Sekundärenergieträger für fluktuierenden Wind- und Solarstrom angesehen., zumal nur er in einer Brennstoffzelle mit hohem Wirkungsgrad rückverstromt werden -kann. Sein Nachteil ist, dass man für seine Verteilung und Speicherung eine eigene, völlig unabhängige Infrastruktur schaffen muss.

Deshalb wird in der vorliegenden Erfindung der Wasserstoff mit Synthesegas methanisiert und das erhaltene Erdgas ähnliche Methan im Gasnetz gespeichert und Methan zur Rückverstromung in der Brennstoffzelle wieder im Dampfreformer in Wasserstoff umgewandelt.

Von der Patentanmeldung WO 2013/152748, "Speicherkraftwerk" in der ebenfalls Wasserstoff durch Elektrolyse gewonnen und gemeinsam mit Synthesegas zu Methan umgesetzt wird, welches in das Erdgasnetz eingeleitet und somit gespeichert wird, kommt bei der vorliegenden Erfindung hinzu, dass gespeichertes Methan vor seiner Rückverstromung in einem Reformer wieder in Wasserstoff umgewandelt wird, der Wasserstoff zur Stromerzeugung verwendet wird und die Stromerzeugung in einer Brennstoffzelle erfolgt.

Von besonderem Vorteil ist, das im Reformer neben Wasserstoff gebildete Kohlendioxid zur Herstellung von Synthesegas zu verwenden. Dazu wird Kohlendioxid mit der äquimolaren Menge an Methan/Erdgas nach der als "dry reforming" bekannten Reaktion zu Synthesgas umgesetzt. Kohlendioxid gelangt in einen Kreislauf und nicht in die Atmosphäre. Sauberes und kostengünstiges Synthesegas ist in ausreichender Menge zur Verfügung. Es entsteht folgender chemischer Kreislauf, beginnend bei der Rekonstruktion von Methan aus Kohlendioxid:
1. Herst. von Synthesegas CO2 + CH4 = 2 (CO +H2)
2. Methanisierung des Elektrolyse-H2 (CO + H2) + 2 H2 = CH4 + H2O
3. Einleiten, Speichern und Verteilen von CH4 im Gasnetz
4. Entnahme und Reformieren von CH4 CH4 + 2 H2O = 4 H2 + CO2
5. Trennung von H2 und CO2, Erzeugung von Energie mit H2 und Rücktransport von CO2 zum Ort der Reproduktion von Methan.

Bei 1. erfolgt eine Vermehrung an Synthesegas durch hinzukommendes Erdgas. Obiger Kreislauf verbraucht also nur die Hälfte des bei 4. gebildeten CO2 zum Rückbau und so kann in 2. zusätzlich erneuerbares Methan, z.B. für CNG-Kraftstoffe produziert werden.

Bei 4. werden zum eingeleiteten Methan (CH4) äquivalente Mengen an Erdgas aus dem Gasnetz entnommen.

Bei 5. abgetrennter Wasserstoff, H2 kann in regionalen Netzen oder Drucktanks verteilt werden.

Nochmals sei darauf hingewiesen: in dem Kreislauf werden in 2. zwei Mol elektrolysestämmiger Wasserstoff zur Bildung von 1 Mol Methan eingesetzt und in 4. werden im Reformer aus 1 Mol -Methan/Erdgas vier Mol Wasserstoff erhalten. Zugesetzt wird in 2. ein Mol Synthesgas, welches in 1. aus ½ Mol Kohlendioxid aus 4. und ½ Mol frischem Methan/Erdgas gewonnen wird.

Als Nebeneffekt der erfindungsgemässen Verfahrensweise wird fluktuierender Wind- und Solarstrom in Form von Erdgas ähnlichem Methan im Gasnetz gespeichert und verteilt. Dies hilft, Überschüsse bei den erneuerbaren Energie abzubauen und so die Stromnetze zu entlasten.

Ebenso wie in "Speicherkraftwerk" wird hier die Effizienz der Elektrolyse durch Zusatz von wohlfeilem Synthesegas zum elektrolysestämmigen Wasserstoff verbessert. In "Speicherkraftwerk" ergibt sich eine Verdoppelung des Wirkungsgrades bei der Rückverstromung, in der vorliegenden Erfindung wird am Ende der Reaktionskette die doppelte Menge an Wasserstoff erhalten.

Ein einfacher Kreislauf mit Rekonstruktion von Methan aus Kohlendioxid wird in der deutschen Patentanmeldung DE102012007136.1 "Rekonstruktion von Methan aus seinen Rauchgasen / Ein chemisches Speicherkraftwerk" beschrieben. In der vorliegenden Erfindung kommt die Zerlegung von Methan in Wasserstoff und Kohlendioxid, Nutzung des Wasserstoffes zur Energieerzeugung und Speicherung sowie Rückführung von Kohlendioxid als zusätzlicher Verfahrensschritt hinzu. Hier wie dort wird Kohlendioxid als chemischer Baustein genutzt und dadurch seine Emission vermieden. Der Vorteil der Rückführung von Methan in Wasserstoff liegt darin, dass Wasserstoff in der Brennstoffzelle wesentlich effizienter in Energie umgewandelt wird als Methan/Erdgas.

Die erfindungsgemässe Rückumwandlung von Methan in Wasserstoff im Dampfreformer mit anschliessender Verstromung in der Brennstoffzelle bewirkt gegenüber der Energieerzeugung durch Verbrennen von Methan/Erdgas vor Allem in Kraftfahrzeugen eine nahezu 100%ige Effizienzsteigerung.

Die vorliegende Erfindung bringt die Mobilität mit der Brennstoffzelle in Reichweite, da der Wasserstoff als Erdgas ähnliches Methan gespeichert, verteilt und trotzdem als solcher genutzt werden kann. Darüber hinaus wird die Effizienz der Elektrolyse, welche die Gesamtkosten des Verfahrens dominiert, verdoppelt. Die Brennstoffzelle ist in der Mobilität der Zukunft deshalb bevorzugt, weil sie die Reichweite der Kraftstoffe mitführenden Verbrennungsmotoren mit der Energie-Effizienz der E-Mobilität verbindet.

## Patentansprüche

1. Verfahren zum Transport, zur Speicherung und Volumenverdoppelung des Sekundärenergieträgers Wasserstoff, in dem mit Energie aus dem Stromnetz oder einer Wind- oder Solaranlage durch Elektrolyse erzeugter Wasserstoff mit Synthesegas zu Methan umgesetzt wird, Methan in das Erdgasnetz eingeleitet und im Erdgasnetz gespeichert und transportiert wird und die dem eingeleiteten Methan entsprechende Menge an Erdgas dem Gasnetz entnommen und in einem Dampfreformer in Wasserstoff und Kohlendioxid zerlegt wird und der vom Kohlendioxid abgetrennte Wasserstoff zur Stromerzeugung in einer Brennstoffzelle verwendet wird und die Brennstoffzelle in einem Kraftfahrzeug zur Mobilität eingesetzt wird.

2. Verfahren nach Anspruch 1, in dem als Synthesegas eine äquimolare Mischung aus Kohlenmonoxid und Wasserstoff verwendet wird und zusätzlich je 1 Mol zu erzeugendem Methan 2 Mol Wasserstoff aus der Elektrolyse hinzugefügt werden und bei der Zerlegung des Methan, bzw. Erdgases im Dampfreformer 4 Mol Wasserstoff und ein Mol Kohlendioxid aus 1 Mol Methan erzeugt werden.

3. Verfahren nach Anspruch 1 und 2, in dem zur Herstellung von Synthesegas Kohle oder Koks verwendet wird.

4. Verfahren nach Anspruch 1 oder 2, in dem zur Herstellung von Synthesegas Biomasse verwendet wird.

5. Verfahren nach Anspruch 1 bis 4, in dem nach der Zerlegung von Methan, bzw. Erdgas im Dampfreformer vom Wasserstoff getrenntes Kohlendioxid gespeichert oder sequestriert wird.

6. Verfahren nach Anspruch 5, in dem 1 Mol gespeichertes Kohlendioxid mit 4 Mol Wasserstoff aus der Elektrolyse zu 1 Mol Methan umgesetzt wird.

7. Verfahren nach Anspruch 5, in dem ½ Mol Kohlendioxid mit ½ Mol Methan, bzw. Erdgas zu Synthesegas umgesetzt werden und das Synthesegas mit 2 Mol Wasserstoff aus der Elektrolyse zu 1 Mol Methan umgesetzt werden und das Methan in das Erdgasnetz eingeleitet wird.

8. Verfahren nach Anspruch 1 bis 7, in dem zur Herstellung von Synthesegas Mischungen aus fossilem und biologischem Kohlenstoff verwendet werden und der sich daraus ergebende Bioanteil durch Messung des C14 im in das Erdgasnetz eingeleiteten Methan nachgewiesen wird.

9. Verfahren nach Anspruch 1 bis 8, in dem das im Reformer gewonnene Kohlendioxid zum Ort der Rekonstruktion des Methan nach Anspruch 6 und 7 transportiert wird.

10. Verfahren nach Anspruch 9, in dem das Kohlendioxid flüssig im Druckbehälter oder als "Trockeneis" in gedämmtem Behälter transportiert und gespeichert wird.

11. Verfahren nach Anspruch 1 bis 10, in dem durch fluktuierenden Wind- und Solarstrom verursachte Überschüsse im Stromnetz als Erdgas ähnliches Methan im Gasnetz gespeichert werden.

12. Verfahren nach Anspruch 5, in dem gespeichertes Kohlendioxid als chemischer Rohstoff vorzugsweise zur Herstellung von Methanol und Formaldehyd verwendet wird.

## Claims

1. A method for transporting, storing and doubling the volume of the secondary energy carrier hydrogen in which hydrogen generated by electrolysis using energy from the electrical grid or from a wind or solar energy installation plant is transformed into methane using with the help of synthesis gas. Methane is fed into the natural gas grid, where it is stored and transported, and The volume of natural gas corresponding to the methane injected is taken from the gas grid and broken down into hydrogen and carbon dioxide in a steam reformer. The hydrogen separated from the carbon dioxide is used to generate electricity in a fuel cell, and the fuel cell is used for mobility in a motor vehicle.

2. Method according to claim 1 in which an equimolar mixture of carbon monoxide and hydrogen is used as synthesis gas and ,in addition, 1 mole of methane generated is added to 2 moles of hydrogen from the electrolysis and 4 moles of hydrogen and one mole of carbon dioxide are generated from 1 mole of methane in the breakdown of methane or natural gas in the steam reformer.

3. Method according to claims 1 and 2 in which coal or coke is used to produce synthesis gas.

4. Method according to claims 1 and 2 in which biomass is used to produce synthesis gas.

5. Method according to claims 1 to 4 in which carbon dioxide separated from the hydrogen is stored or sequestered after the breakdown of methane or natural gas in the steam reformer.

6. Method according to claim 5 in which 1 mole of stored carbon dioxide with 4 moles of hydrogen from electrolysis is transformed into 1 mole of methane.

7. Method according to claim 5 in which ½ mole of carbon dioxide with ½ mole of methane or natural gas is transformed into synthesis gas, and the synthesis gas with 2 moles of hydrogen from electrolysis is transformed into 1 mole of methane, and the methane is fed into the natural gas grid.

8. Method according to claims 1 to 7 in which mixtures of fossil and biological carbon are used for the production of synthesis gas, and the resulting organic content is proven by measuring C14 in the methane fed into the natural gas grid.

9. Method according to claims 1 to 8 in which the carbon dioxide obtained in the reformer is transported to the place of methane reconstruction according to claims 6 and 7.

10. Method according to claim 9 in which carbon dioxide is transported and stored in insulated pressure containers in liquid form or as "dry ice".

11. Method according to claims 1 to 10 in which surpluses in the power grid caused by fluctuating wind or solar power are stored as natural gas-like methane.

12. Method according to claim 5 in which stored carbon dioxide is used as a chemical raw material, preferably in the production of methanol and formaldehyde.

## Revendications

1. Procédé de transport, de stockage et de doublement du volume de l'hydrogène porteur d'énergie secondaire, dans lequel l'hydrogène produit par électrolyse à partir de l'énergie du réseau électrique ou d'une installation éolienne ou solaire est transformé en méthane avec du gaz de synthèse, Le méthane est injecté, stocké et transporté dans le réseau de gaz naturel. La quantité de gaz naturel correspondant au méthane injecté est retirée du réseau de gaz et décomposée en hydrogène et en dioxyde de carbone dans un reformeur de vapeur. L'hydrogène séparé du dioxyde de carbone est utilisé pour générer l'électricité dans une pile à combustible et la pile à combustible est utilisée dans un véhicule automobile pour la mobilité.

2. Procédé selon la revendication 1, dans lequel on utilise comme gaz de synthèse un mélange équimolaire de monoxyde de carbone et d'hydrogène et, en outre, on ajoute en plus 2 moles d'hydrogène provenant de l'électrolyse pour 1 mole de méthane à produire. On produit 4 moles d'hydrogène et 1 mole de dioxyde de carbone pour 1 mole de méthane pendant la décomposition du méthane ou du gaz naturel dans le reformeur de vapeur.

3. Procédé selon les revendications 1 et 2, en utilisant du charbon ou du coke pour produire du gaz de synthèse.

4. Procédé selon les revendications 1 et 2, en utilisant de la biomasse pour produire du gaz de synthèse.

5. Procédé selon les revendications 1 à 4, en stockant ou en séquestrant du dioxyde de carbone séparé de l'hydrogène après la décomposition du méthane ou du gaz naturel dans le reformeur de vapeur.

6. Procédé selon la revendication 5, on fait réagir 1 mole de dioxyde de carbone stocké avec 4 moles d'hydrogène par électrolyse pour 1 mole de méthane.

7. Procédé selon la revendication 5, dans lequel on transforme du dioxyde de carbone en gaz de synthèse avec du méthane ou du gaz naturel et on transforme le gaz de synthèse en 1 mole de méthane avec 2 moles d'hydrogène par électrolyse et on injecte le méthane dans le réseau de gaz naturel.

8. Procédé selon les revendications 1 à 7, en utilisant des mélanges de carbone fossile et biologique pour produire du gaz de synthèse et en détectant la fraction biologique résultante en mesurant le C14 dans le méthane injecté dans le réseau de gaz naturel.

9. Procédé selon les revendications 1 à 8, en transportant le dioxyde de carbone acquis dans le reformeur sur le site de la reconstitution du méthane selon les revendications 6 et 7.

10. Procédé selon la revendication 9, en transportant et en stockant le dioxyde de carbone sous forme liquide dans un récipient sous pression ou sous forme de « glace sèche » dans des récipients isolés.

11. Procédé selon les revendications 1 à 10, en stockant l'électricité excédentaire produite par les fluctuations de l'énergie éolienne et solaire dans le réseau électrique sous forme de méthane, comme le gaz naturel.

12. Procédé selon la revendication 5, en utilisant du dioxyde de carbone stocké comme matière première chimique de préférence pour produire du méthanol et du formaldéhyde.
